# EUROPEAN PATENT APPLICATION

(11) **EP 1 714 549 A1**
(43) Date of publication of application: **25.10.2006**
(21) Application number: 06075916.4
(22) Date of filing: 20.04.2006
(51) Int. Cl.: A01K 39/012

(54) **Bird feeding apparatus**

(30) Priority: 23.04.2005 GB 0508220
(71) Applicant: C J Wildbird Foods Limited, Shrewsbury SY4 4UR (GB)
(72) Inventor: Nock, Robert Kenneth, Mellieha (MT)
(74) Representative: Barnfather, Karl Jon

(57) **Abstract**

A birdfeeder of simple construction comprising a hopper member (12) for storing birdfeed, and a dispenser member (14) for dispensing feed to birds; the hopper member having a discharge aperture and adjustment means (30) that allow the position of the hopper member (12) relative to the dispensing member (14) to be adjusted from a first position which prevents flow of food from the hopper member to the dispensing member; to a second position which allows flow of food from the hopper member to the dispensing member and where an inclined surface depending from the dispenser member presents at least one perch (50) from which birds can easily reach feeding ports in the discharge member.

## Description

This invention relates to bird feeding apparatus and in particular to a bird feeder.

Known bird feeders typically comprise a cylindrically shaped main body with a non-integral base and a detachable hood, the latter being provided in order to readily allow the main body to be charged with bird food. In addition, a plurality of feeding ports are typically positioned in the main body wall each with an associated perch. Sometimes the feeding port and perch comprise a single unit.

While such bird feeders are very effective in some respects they have drawbacks. An aim of the present invention is to provide a bird feeder that is simpler to construct and so cheaper to produce. Another aim is to provide a bird feeder that can be sold ready charged with bird seed or the like while avoiding loss and spillage of this food prior to use by a buyer. Another aim is to provide a bird feeder that can, if desired, be readily charged with bird food prior to sale. A further aim is to produce a bird feeder with perches that suit different sized birds and allow birds to face a feeding port while perched on the feeder.

In one aspect the bird feeding apparatus comprises a hopper member for storing birdfeed, and a dispenser member for dispensing feed to birds, said hopper comprising a funnel having a discharge aperture; wherein adjustment means are provided around the periphery of the hopper member to allow progressive or multi-stepwise adjustment of the position of the hopper member relative to the dispenser member; from a first position in which the discharge aperture is restricted so as to prevent flow of food from the hopper to the dispenser to a second position which allows flow of food from the hopper to the dispenser.

In another aspect the bird feeder apparatus comprises a hopper member for storing birdfeed, and a dispenser member for dispensing feed to birds; said hopper comprising a funnel having a discharge aperture; wherein adjustment means are provided around the periphery of the hopper member to allow continuous axial adjustment of the position of the hopper relative to the dispenser; said adjustment from a first position in which the outlet of the aperture is restricted so as to prevent flow of food from the hopper to the dispenser to an axially displaced second position which allows flow of food from the hopper to the dispenser.

In another aspect the invention comprises a bird feeder apparatus having a hopper member for storing birdfeed, and a dispenser member for dispensing feed to birds; said hopper comprising a funnel having a discharge aperture; wherein adjustment means are provided around the periphery of the hopper member to allow continuous axial adjustment of the position of the hopper relative to the dispenser; said adjustment from a first position in which the outlet of the aperture is restricted so as to prevent flow of food from the hopper to the dispenser to an axially displaced second position which allows flow of food from the hopper to the dispenser.

Preferably, in either of the above aspects the adjustment means comprises a protrusion in the hopper or dispenser and a recess or aperture in the dispenser or hopper respectively. The hopper may be generally tubular in shape and is preferably cylindrical in shape. The adjustment means may allow axial movement of the hopper relative to the dispenser. Preferably, the adjustment means comprises a screw thread on the hopper and a corresponding thread on the dispenser. An alternative is for free movement of the hopper relative to the second to be inhibited by resilient means. For example; the adjustment means may comprise a series of notches or the like on the like on an outer surface of the hopper that in use resiliently engage an inner surface of the dispenser. The above provides a birdfeeder of simple construction that can be sold ready charged with birdfood and wherein that birdfood can be securely retained within the feeder by ensuring that once initially filled with birdfood that it is stored in the closed position; that is the adjustment means is in the first position. After purchase a user can conveniently open the feeder in a single movement, thus allowing birdfood to be dispensed from the hopper to the dispenser.

Preferably the dispenser has at least one feeding port comprising an aperture. Thus, when the adjustment means is in the second position stored birdfood may flow through the feeder to this feeding port.

The apparatus may comprise a perch member formed on a surface inclined at an acute angle to vertical in use. The acute angle is preferably in the range 5° to 40° and more preferably in the range 15° to 30°. An individual perch may be formed by providing adjacent slots in the inclined surface. At least one of the slots may be arcuate in shape and the arcuate slot may have a radius radiates from the longitudinal axis of the feeder. Preferably, the inclined surface is provided by a sleeve that surrounds the dispenser. The sleeve may conveniently be frustroconical in shape or for feeders with non-circular side walls may be take the shape of a truncated pyramid or the like. The sleeve may also be formed as an integral part of the dispenser. Alternatively, the sleeve may be provided as a separate item that fits around the main body of the birdfeeder. In use such a sleeve may be held in place by resilient means. The above perch arrangement is of simple construction and offers the further advantages of allowing small birds to feed from a perch near to a feeding port on the highest perch and larger birds to feed from the lower perch or perches (and for example, more radially distant from the axis of the main feeder body). The above perch also allows perched birds to directly face a feeding port without bending their neck. This generally makes the perch more appealing to birds than many other perches which require the bird to bend during feeding. If the perch comprises a sleeve this may also include an extension sleeve that is dimensioned to closely fit around the side walls of the main body of the dispenser member wherein the extension sleeve has one or more apertures that are the same size or smaller than the apertures in the dispenser. In use an aperture in the extension sleeve may overlap the aperture in the main dispenser body; however, as the aperture in the extension sleeve may be smaller, this provides a means of rapidly changing the effective size of the feeding port aperture (to suite different sized feed or birds) without replacing the main body of the dispenser member. A removable sleeve also allows the configuration of the perch to be rapidly changed to suit varying sized birds etc. again without replacing the main body of the dispenser member.

In another aspect the invention comprises a perch having a sleeve dimensioned to closely fit around the main body of a birdfeeder wherein said sleeve presents a surface inclined at an acute angle to the longitudinal axis of the birdfeeder and wherein at least one perch is formed on the inclined surface. All of the optional features detailed above in respect of earlier mentioned aspects of the invention are also applicable to this aspect.

The invention will now be described in more detail by reference to the following diagramatic figures in which:
Figure 1 is shows a side view of a birdfeeder according to a first embodiment of the invention, in an open position;
Figure 2 shows a side view of the feeder of Figure 1 in a closed position;
Figure 3 is a perspective view showing the upper aspects of the feeder of Figure 1;
Figure 4 is a perspective view showing the lower aspects of the feeder of Figure 1;
Figure 5 shows a side view of a dispensing member:
Figure 6 shows a plan view of the dispensing member of Figure 5;
Figure 7 shows a cross section along lines A-A' on Figure 5 of the dispensing member of Figure 5;
Figures 8 shows an underside view of the dispensing member of Figure 5;
Figure 9 shows a side view of the hopper member;
Figure 10 shows a plan view of the hopper member of Figure 9;
Figure 11 is a perspective view showing two identical feeders according to the invention one stacked on top of the other;
Figure 12 shows a side view of the dispenser member according to a second embodiment of the invention; and
Figure 13 shows an underside view of the dispenser of Figure 12.

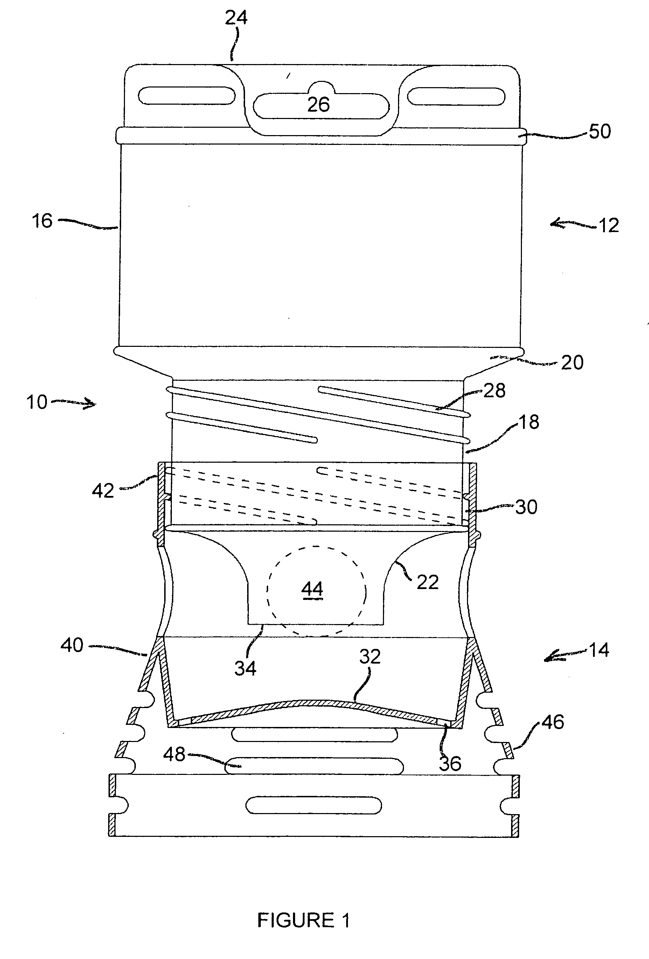

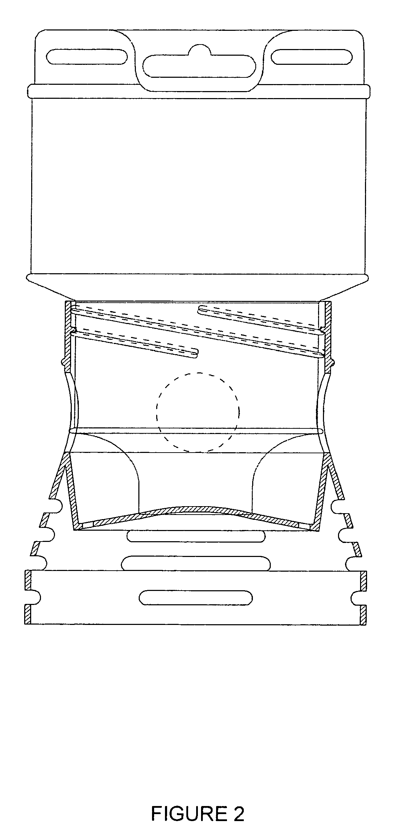

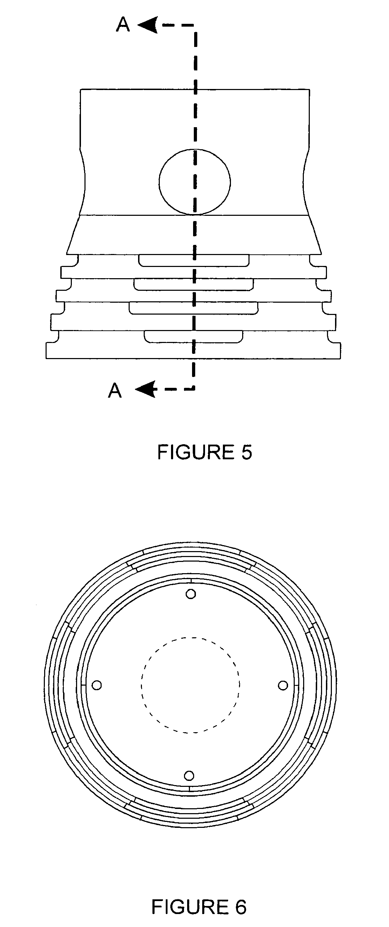

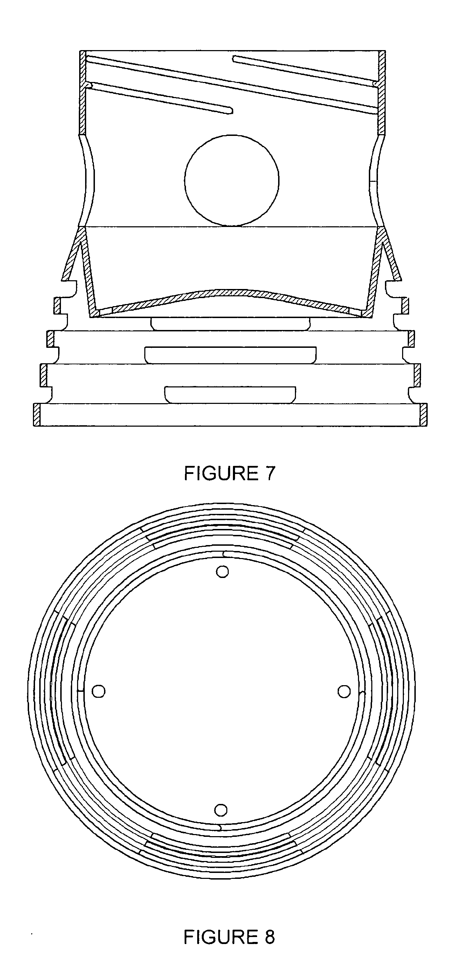

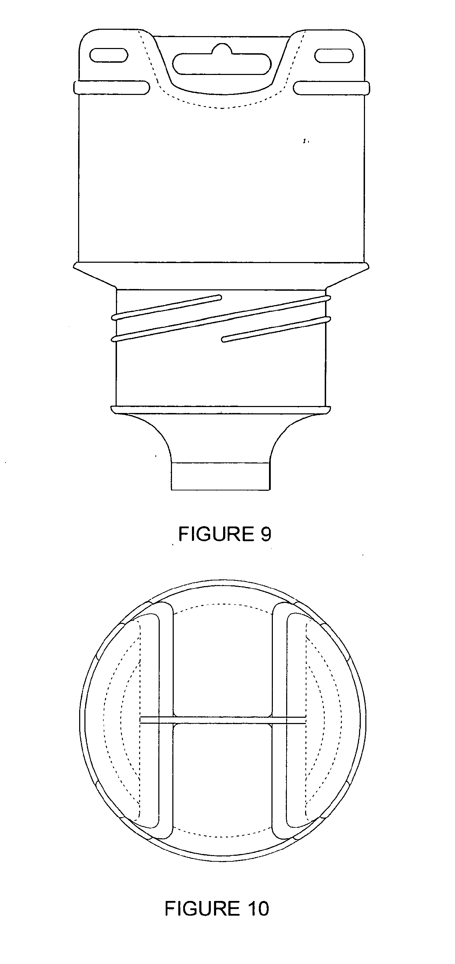

Figures 1 to 10 show views of a feeder according to a first embodiment of the invention. Figure 1 shows the feeder ready for use in an open position, while Figure 2 shows the feeder in a closed position. The feeder is in the closed position at various times such as before sale and prior to first use. The bird feeder 10 comprises a hopper member 12 and a dispensing member 14. The hopper member 12 comprises a first cylindrical portion 16, extending downwardly to a second cylindrical portion 18 via a frustro-conically shaped intermediate portion 20. The second cylindrical portion 18 extends downwardly to a funnel shaped distributor portion 22, through which in use, feed may be charged to or discharged from the hopper member 12. Hopper member 12 further comprises a roof portion 24 formed with an integral hanger slot 26. Hopper member 12 is preferably formed as a single integral component from a plastics material or the like, preferably at least a partially transparent material so that the birdfeed stored within is visible to a user.

The second cylindrical portion 18 of the hopper member 12 is configured to engage the dispensing member 14 so that in use the position of the hopper member 12 can be continuously adjusted relative to the position of the dispensing member 14. This is conveniently achieved by providing a male helical thread 28 on outside of the second cylindrical portion and providing a corresponding female thread 30 in the top of the dispensing member 14. Thus, as a user turns the hopper member 12 relative to the threaded female portion 30 of the discharge member 14, the hopper member moves relative to the dispensing member. The dispensing member 14 further comprises a convex base 32 part of which in use may abut against a discharge orifice 34 of throat 22. Such abutment occurs when the male thread 28 is near fully screwed into female thread 30; effectively sealing the orifice 34 and so preventing passage of birdfood from the hopper member 12 to the dispenser member 14 (see Figure 2). In contrast, when the male thread is partially or near fully unscrewed birdfood may flow from the hopper member 12 to the dispenser member 14.

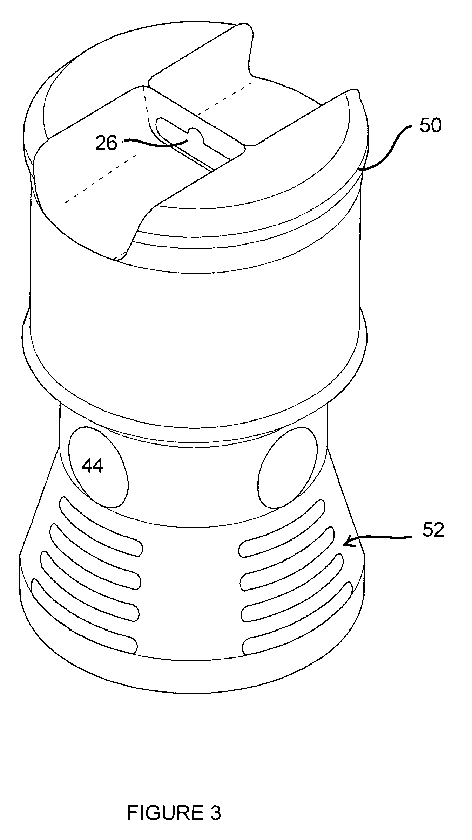

Convex base 32 has near its periphery one or more drainage apertures 36, sized to allow water to drain from birdfood but not large enough to allow the birdfood to pass therethrough. Convex base 32 has an upwardly directed frustroconical/cylindrical wall depending therefrom the upper end of which is preferably integrally formed with the outer wall 40 of the dispensing member. The upper end 42 of outer wall 40 provides the outer part of female thread 30; the middle portion has a plurality of circular apertures 44 that provide feeding ports. The lower end 46 of wall 38 is generally frustroconical in shape and has arcuate slots 48 that together form a plurality of perches 50 (see Figure 3). The inclination of the lower end 44 of the outer wall at an acute angle to the vertical results in a series of concentric arcuate perches 52 that conveniently accommodate birds of varying size. The arrangement also advantageously allows a perched bird to directly face the feeding ports 44, without needing to bend its neck. Preferably, the dispensing member is a single component formed from a plastics material or the like.

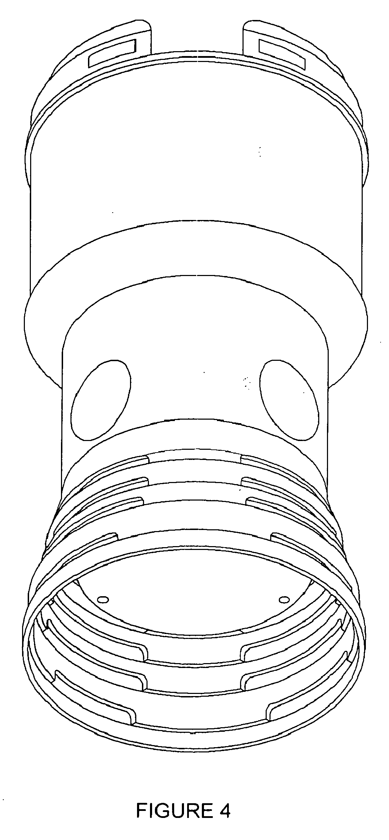

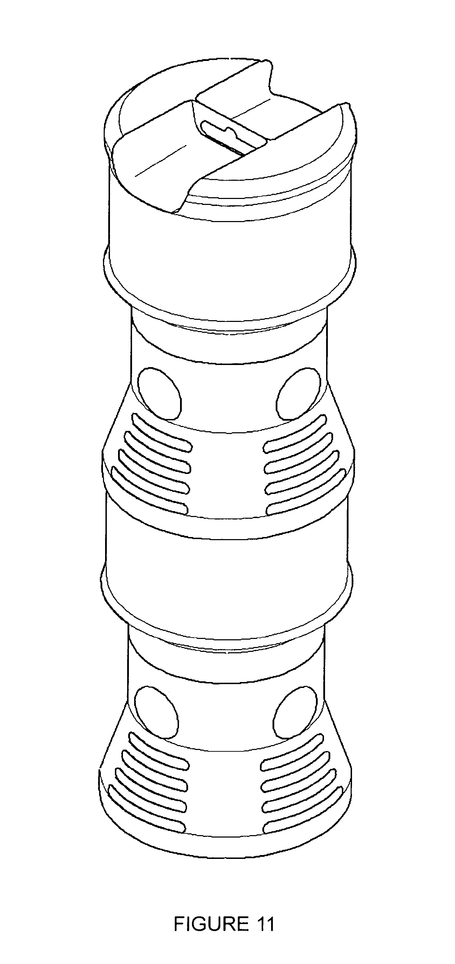

Figure 4 shows an underside perspective view of dispensing member 14. This is configured to snap engage a rim 50 (see Figure 1) around the top edge of the hopper member 12. This conveniently allows one feeder to be stacked on top of another feeder (see Figure 11)

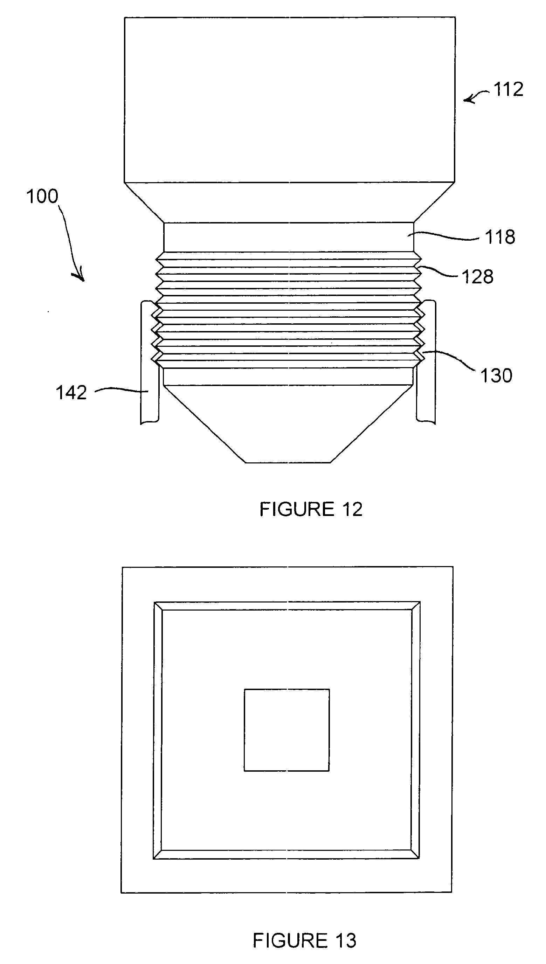

The means of adjusting the hopper member 12, 112 relative to the dispenser member is not restricted to being a screw thread. Thus, in another embodiment (see Figures 12 and 13) of the invention the adjustment means 100 comprises a male tubular member of square cross section 118 with notches 128 and a female tubular sleeve 142 (part only shown) with corresponding recesses 130. In such a case these members are preferably formed from a resilient material such as plastics. This arrangement has the advantage of being suitable for use with non-circulat tubular sleeves; for example with tubular sleeves that have a rectangular cross section.

In summary, the apparatus of the invention provides a birdfeeder of simple construction comprising a hopper member for storing birdfeed, and a dispenser member for dispensing feed to birds and means of varying the position of the hopper relative to the dispenser that effectively provides a valve to either prevent or allow the flow of birdfood from the hopper to the dispenser. An inclined surface depending from the dispenser member presents at least one perch from which birds can easily reach feeding ports in the discharge member.

## Claims

1. Bird feeder apparatus comprising a hopper member for storing birdfeed, and a dispenser member for dispensing feed to birds, said hopper comprising a funnel having a discharge aperture; wherein adjustment means are provided around the periphery of the hopper member to allow progressive or multi-stepwise adjustment of the position of the hopper member relative to the dispenser member; from a first position in which the discharge aperture is restricted so as to prevent flow of food from the hopper to the dispenser to a second position which allows flow of food from the hopper to the dispenser.

2. Apparatus according to Claim 1 wherein the adjustment means allows axial movement of the hopper relative to the dispenser.

3. Apparatus according to any preceding claim wherein free movement of the hopper relative to the dispenser is inhibited by resilient means.

4. Apparatus according to any preceding claim wherein the adjustment means comprise a series of protrusions that in use resiliently engage an inner surface of the dispenser.

5. Apparatus according to Claim 1 or 2 wherein the adjustment means comprises an arcuate thread on the hopper and a mating thread on the dispenser.

6. Apparatus according to any preceding claim wherein at least one perch is formed on a surface inclined at an acute angle to the longitudinal axis of the feeder.

7. Apparatus according to any of claims 1 to 5 comprising a bird feeder perch having a sleeve dimensioned to closely fit around the main body of a birdfeeder wherein said sleeve presents a surface inclined at an acute angle to the longitudinal axis of the birdfeeder.

8. Apparatus according to Claim 6 or 7 where an individual perch is formed by providing apertures in the inclined surface.

9. Apparatus according to Claim 8 wherein the sleeve is formed as an integral part of the dispenser and/or is frustroconical in shape.

10. Apparatus according to any preceding claim wherein the dispenser comprises at least one feeding port provided by an aperture
